# FASCICULE DE BREVET EUROPEEN

(11) **EP 4 185 491 B1**
(45) Date de publication et mention de la délivrance du brevet: **26.06.2024**
(21) Numéro de dépôt: 21755521.8
(22) Date de dépôt: 16.07.2021
(51) Int. Cl.: B60R 11/00

(54) **ENSEMBLE AVEC FAÇADE MOBILE POUR LA FIXATION D'UN APPAREIL ÉLECTRONIQUE PORTATIF DANS UN VÉHICULE AUTOMOBILE**
EINHEIT MIT BEWEGLICHER VORDERSEITE ZUR BEFESTIGUNG EINER TRAGBAREN ELEKTRONISCHEN VORRICHTUNG IN EINEM KRAFTFAHRZEUG
UNIT WITH A MOVABLE FRONT FOR ATTACHMENT OF A PORTABLE ELECTRONIC DEVICE IN A MOTOR VEHICLE

(30) Priorité: 23.07.2020 FR 2007729
(43) Date de publication de la demande: 31.05.2023
(73) Titulaire: Stellantis Auto SAS, 78300 Poissy (FR)
(72) Inventeur: PORET, Benoit, 78117 CHATEAUFORT (FR); HUCHE, Thierry, 78113 CONDE SUR VESGRE (FR); REGNIER, Pierre Yves, 91370 VERRIERES LE BUISSON (FR)
(86) Numéro de dépôt international: PCT/FR2021/051336
(87) Numéro de publication internationale: WO 2022/018367

(56) Documents cités:
- CN-A- 101 734 204
- DE-U1-202018 103 407
- US-A1- 2015 283 950

## Description

La présente invention concerne un ensemble pour la fixation d'un appareil électronique portatif sur une planche de bord d'un véhicule automobile, et le véhicule automobile comprenant ledit ensemble. La présente invention concerne également une coque pour la fixation d'un appareil électronique portatif et un dispositif de support d'une telle coque.

L'utilisation d'appareils électroniques portatifs, comme par exemple des tablettes numériques et/ou des smartphones, est aujourd'hui généralisée. Dès lors, dans un véhicule automobile, il est intéressant que ces appareils puissent être utilisés avec sécurité et de manière confortable, notamment pour le passager avant du véhicule.

Le document FR 3 056 504 décrit un dispositif de support pour appareil électronique portatif sur une planche de bord d'un véhicule automobile. Un évidement est aménagé dans la partie supérieure de la planche de bord, et reçoit un cadre support mobile, escamotable entre une position rangée dans l'évidement et une position d'utilisation où le cadre support est déployé en dehors de l'évidement de sorte à présenter une zone pouvant accueillir l'appareil électronique. En cas de déclenchement du coussin de sécurité gonflable côté passager, le caractère escamotable du cadre support lui permet de se replier automatiquement dans l'évidement.

Le document CN101734204 décrit un support pour un appareil électronique portatif disposé sur une planche de bord correspondant au préambule de la revendication 1. Le document US2015283950 décrit un support pour un appareil électronique portatif qui se fixe de manière démontable sur une interface sur une planche de bord de véhicule.

Le dispositif de support permet ainsi au passager avant du véhicule de poser un appareil électronique portatif sur la planche de bord tout en se trouvant dans un véhicule répondant aux normes de sécurité.

Malheureusement, il a été constaté que lors du roulage du véhicule, les vibrations générées sont transmises à l'appareil électronique portatif par le biais de son dispositif de support ce qui peut poser des problèmes de lisibilité des contenus présentés et donc altérer le confort du passager dans son utilisation de l'appareil. Il y a donc un besoin d'amélioration de la situation. Par ailleurs, cette configuration implique une implantation du coussin gonflable de sécurité en partie inférieure de la planche de bord, au détriment de l'espace de rangement qui s'y trouve habituellement. Un compartiment de rangement est prévu en partie supérieure mais le volume de rangement proposé reste limité.

L'invention a pour objectif d'améliorer la situation antérieure. En particulier, l'invention cherche à trouver un système qui puisse permettre au passager avant du véhicule d'utiliser son appareil électronique en toute sécurité avec un confort amélioré, par exemple en ce qu'il est moins sujet à des vibrations.

A cet effet, et selon un premier aspect, l'invention a pour objet un ensemble pour la fixation d'un appareil électronique portatif dans un véhicule automobile, qui comprend un dispositif de support et dont ledit dispositif support comprend une platine de fixation destinée à fixer de manière réversible un appareil électronique portatif, un élément de façade monté pivotant sur ledit dispositif de support autour d'un axe de rotation, entre une position neutre dans laquelle l'élément de façade est disposé en vis-à-vis de la platine et une position dégagée dans laquelle l'élément de façade est en dehors du vis-à-vis de la platine de sorte à permettre la fixation d'un appareil électronique portatif sur ladite platine, et un moyen de rappel de l'élément de façade vers la position neutre. L'élément de façade est maintenu sur le dispositif de support de part et d'autre dudit dispositif de support par l'axe de rotation, le ressort comportant deux parties hélicoïdales et une partie intermédiaire disposée entre les deux parties hélicoïdales, chacune de ces parties hélicoïdales étant traversée par l'axe de rotation et comportant chacune une extrémité reliée au dispositif de support, la partie intermédiaire étant reliée à l'élément de façade. Le moyen de rappel est un ressort s'appuyant d'un côté sur le dispositif de support et de l'autre côté sur l'élément de façade.

Ainsi avantageusement, lorsqu'un appareil est installé sur le dispositif de support, fixé à la platine, en ayant déplacé l'élément de façade vers la position dégagée, le moyen de rappel ramène l'élément de façade vers la position neutre de sorte à être en contact contre l'appareil. Cet effort de rappel réduit de manière importante les vibrations de l'élément de façade en plaquant ledit élément de façade contre l'appareil électronique portatif, notamment lorsque le véhicule roule, et réduit donc les vibrations de l'appareil électronique. Le confort d'utilisation de l'appareil électronique portatif est donc amélioré.

Un autre avantage est que les efforts de rappel peuvent être transmis à l'élément de façade sur une grande zone, disposée en particulier entre les parties hélicoïdales, réduisant les vibrations. De plus, le montage est facilité car les deux parties hélicoïdales sont maintenues par l'axe de rotation. Les risques de chute et de perte du ressort lors du montage sont donc très réduites. Un autre avantage est que l'effort de rappel peut être important tout un utilisant un ressort réalisé avec un file de diamètre réduit, la présence de deux parties hélicoïdales permettant d'obtenir un effort important malgré la finesse du fil du ressort. Un autre avantage est que l'effort de rappel peut être appliqué sur une plus grande surface et de manière symétrique, grâce à la partie intermédiaire reliée aux deux parties hélicoïdales, notamment en choisissant ces parties hélicoïdales identiques.

De manière avantageuse, le dispositif de support comporte un élément de maintien contre lequel s'appuie-chacune des extrémités du ressort.

Dans un autre mode de réalisation de l'invention, l'ensemble pour la fixation d'un appareil électronique portatif comprend une coque destinée à recevoir l'appareil électronique portatif, la coque comportant un logement configuré pour recevoir ladite platine de fixation en vue de la fixation réversible de la coque sur le dispositif de support.

Ainsi, l'ensemble pour la fixation d'un appareil électronique portatif dans un véhicule automobile comprend un dispositif de support avec une platine de fixation qui s'insère dans le logement d'une coque destinée à recevoir ledit appareil. Ainsi avantageusement, la platine de fixation permet de stabiliser l'appareil électronique portatif par une fixation solide de la coque, et donc de limiter voire d'éviter les phénomènes vibratoires altérant le confort de l'utilisateur lors du roulage du véhicule. La platine de fixation permet de s'affranchir des problèmes de vibrations en apportant de la rigidité à l'ensemble et un arrimage solide de l'appareil électronique portatif, par exemple à la planche de bord du véhicule, de préférence à la traverse de planche de bord. L'utilisateur, en particulier le passager avant du véhicule, peut ainsi profiter pleinement de son appareil électronique portatif en toute sécurité. La coque permet donc de fixer l'appareil électronique portatif sur le dispositif de support.

Selon un mode de réalisation préféré, la platine de fixation comprend au moins une encoche et la coque comprend un dispositif de fixation avec au moins un crochet mobile entre une position d'ouverture et une position de verrouillage pour la fixation réversible de la coque sur le dispositif de support par coopération entre ledit crochet et ladite encoche.

La présence d'un système encoche-crochet entre la platine de fixation du dispositif de support et le dispositif de fixation de la coque permet d'insérer la coque sur le dispositif de support tout en assurant le blocage de la coque en position. Aucun outil n'est donc nécessaire pour s'assurer du montage de la coque sur le dispositif de support, ce qui le simplifie pour l'utilisateur.

L'invention porte aussi sur un véhicule comprenant un l'ensemble pour la fixation d'un appareil électronique portatif tel que décrit précédemment
L'invention sera mieux comprise à la lecture de la description qui va suivre, donnée uniquement à titre d'exemple et faite en se référant aux dessins annexés, sur lesquels :
[Fig. 1] La figure 1 est une vue de la planche de bord d'un véhicule automobile côté passager.
[Fig. 2] La figure 2 est une vue de l'ensemble pour la fixation d'un appareil électronique portatif dans un véhicule automobile selon l'invention.
[Fig. 3] La figure 3 est une vue de la coque pour la fixation d'un appareil électronique portatif selon un mode de réalisation de l'invention.
[Fig. 4] La figure 4 est une vue de la position de verrouillage des crochets de la coque dans un cas de dispersion de positionnement selon un mode de réalisation de l'invention.
[Fig. 5] La figure 5 est une vue d'un crochet en position de verrouillage selon un mode de réalisation de l'invention.
[Fig. 6] La figure 6 est une vue de la coque et du dispositif de fixation selon un mode de réalisation de l'invention.
[Fig. 7] La figure 7 est une vue de la paroi arrière de la coque selon un mode de réalisation de l'invention.
[Fig. 8] La figure 8 est une vue de l'ensemble de fixation avec l'élément de façade en position neutre.
[Fig. 9] La figure 9 est une vue de l'ensemble de fixation avec l'élément de façade en position dégagée et un appareil électronique portatif fixé sur le dispositif de support.
[Fig. 10] La figure 10 est une vue en coupe de l'ensemble de fixation.
[Fig. 11] La figure 11 est une vue d'un mode de réalisation du ressort.

Les dessins sont des représentations schématiques pour faciliter la compréhension de l'invention. Les composants ne sont pas forcément représentés à l'échelle. Les mêmes références correspondent aux mêmes composants d'une figure à l'autre.

Dans la description qui suit, le terme « comprendre » est synonyme de « inclure » et n'est pas limitatif en ce qu'il autorise la présence d'autres éléments ou moyens dans la coque d'un appareil électronique portatif, le dispositif de support d'une telle coque ou l'ensemble de fixation d'un appareil électronique portatif auquel il se rapporte. Il est entendu que le terme « comprendre » inclut les termes « consister en ». Sur les différentes figures, les mêmes références désignent des éléments identiques ou similaires.

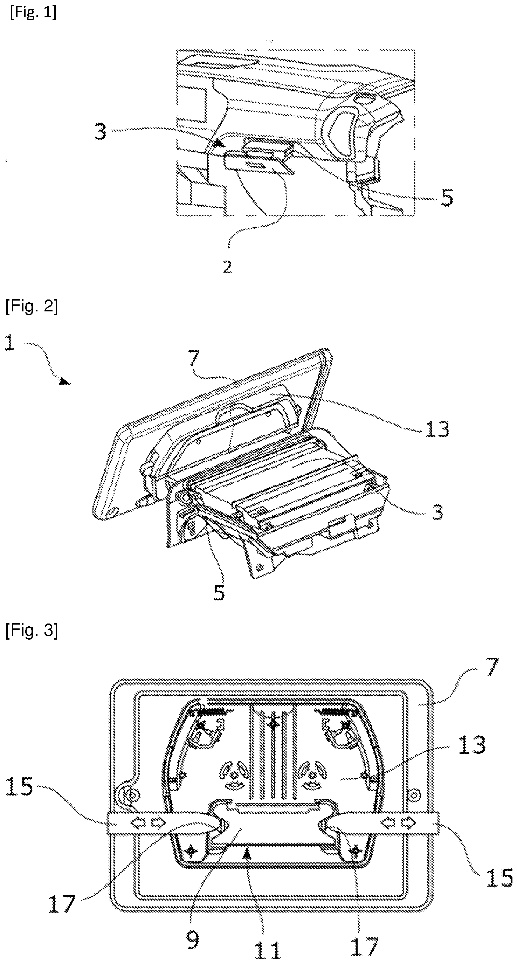

La figure 1 montre le côté passager d'une planche de bord d'un véhicule automobile. Un dispositif de support 3 escamotable pour une coque d'un appareil électronique portatif y est représenté en position déployée. Le dispositif de support 3 est par exemple placé au-dessus du rangement de vide-poche d'un véhicule. Ce dispositif de support 3 fait partie d'un ensemble pour la fixation d'un appareil électronique portatif, par exemple une tablette numérique ou un smartphone, dans un véhicule automobile. Cet ensemble 1 est intégralement représenté à la figure 2 et comprend, outre le dispositif de support 3, une coque 7 destinée à recevoir ledit appareil électronique (non-représenté).

La fixation d'un tel ensemble 1 sur la planche de bord d'un véhicule automobile permet de réduire considérablement les vibrations.

Comme visible sur les figures 1 et 2, le dispositif de support 3 est préférentiellement télescopique. A cet effet, le dispositif de support 3 comprend système de glissière 5 et peut être en partie mobile par translation le long d'au moins une glissière. Ainsi, lorsque le passager ne se sert pas d'un appareil électronique portatif, il est possible d'escamoter le dispositif de support 3 dans un évidement de la planche de bord, ce qui permet d'éviter que des éléments soient disposés en saillie de la planche de bord. Par exemple, le rangement du dispositif de support peut se faire par pression pour son escamotage.

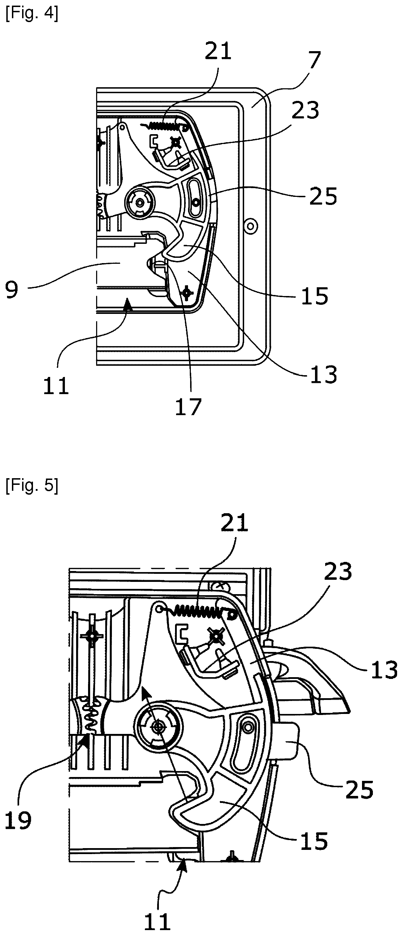

Un élément de façade 2 est fixé sur le dispositif de support 3. Le déploiement dudit dispositif de support 3 peut se faire par pression sur cet élément de façade 2 associé, un système d'ouverture par pression de type connue sous le nom de « push-pull » aidant à la sortie. L'élément de façade 2 est avantageusement monté pivotant de manière à dégager la platine de fixation 9 du dispositif de support 3 (visible par exemple sur les figures 3 et 4), de préférence autour d'un axe de rotation 4 horizontal, agencé par exemple sous la platine de fixation 9. Lorsque aucun appareil électronique portatif n'est installé sur le dispositif de support 3, à l'aide de la coque 7, l'élément de façade 2 est en position neutre, devant la platine de fixation 9 suivant la direction de translation du dispositif de support 3. Dans cette position neutre, l'élément de façade 2 masque la platine de fixation 9, notamment lorsque le dispositif de support 3 est escamoté dans un évidement de la planche de bord.

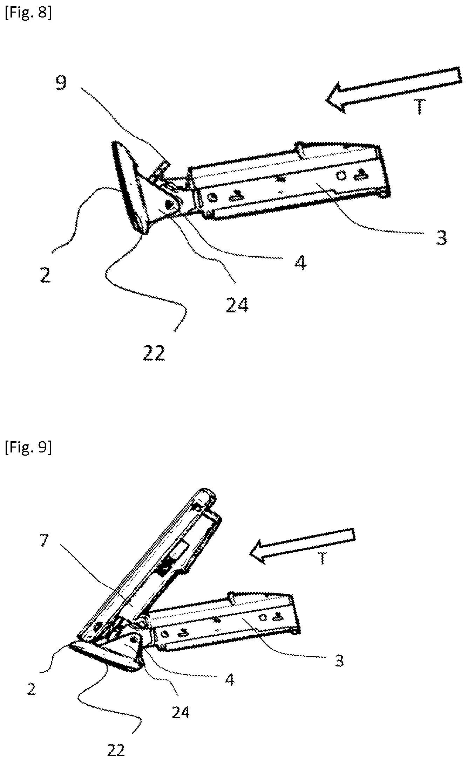

Lorsque la coque, équipée d'un appareil électronique portatif, est montée sur la platine de fixation 9, l'élément de façade 2 pivote dans une position dégagée autour de l'axe de rotation 4. La figure 8 montre l'élément de façade 2 dans la position neutre, et la figure 9 montre l'élément de façade dans la position dégagée, poussée par la coque 7 ou par l'appareil électronique portatif, lors de son montage sur la platine de fixation 9.

Le dispositif de support 3 et la coque 7 destinée à recevoir l'appareil électronique portatif sont réalisés en matériau plastique, par exemple en matériau élastomère tel que l'éthylène-propylène-diène monomère (EPDM).

Le dispositif de support 3 comprend par ailleurs une platine de fixation 9 tandis que la coque 7 comprend un logement 11 configuré pour recevoir ladite platine de fixation 9 en vue de la fixation réversible de la coque 7 sur le dispositif de support 3.

Afin de caler la coque 7 sur le dispositif de support 3, la coque 7 comprend un dispositif de fixation 13 avec au moins un crochet 15 qui coopère avec au moins une encoche 17 découpée sur un des bords de la platine de fixation 9. Préférentiellement, la coque 7 comprend deux crochets 15 et la platine de fixation 9 comprend deux encoches 17 correspondantes.

Le dispositif de fixation 13, également réalisé en matériau plastique, par exemple en matériau élastomère tel que l'éthylène-propylène-diène monomère (EPDM), peut être rapporté à la coque 7 ou être venu de matière avec celle-ci.

De manière préférentielle, la coque 7 montre une paroi arrière et le logement 11 est formé dans la paroi arrière de la coque 7.

Selon un mode de réalisation montré à la figure 3, le ou les crochets 15 sont des languettes qui sont mobiles entre une position d'ouverture et une position de verrouillage. La figure 3 montre la platine 9 de fixation du dispositif de support 3 insérée dans le logement 11 de la coque 7. Les autres éléments du dispositif de support 3 ne sont pas représentés pour des raisons de clarté et de lisibilité de la figure. Sur la figure 3 une paire de crochets 15 est en partie engagée dans une paire d'encoches 17 de la platine 9 de fixation. La position est une position intermédiaire qui peut déjà être une position de verrouillage. Un mouvement de translation des crochets est nécessaire afin de libérer les crochets 15.

Selon un mode de réalisation préféré, alternatif au précédent et, montré aux figures 4 à 8, au moins un crochet 15 est fixé à la coque 7 par une liaison pivot se sorte à se déplacer selon un arc de cercle. Avantageusement, le ou les crochets 15 du dispositif de fixation 13 sont fixés chacun par une liaison pivot autour d'un axe de rotation perpendiculaire à la coque 7, et plus particulièrement perpendiculaire à la paroi arrière de la coque 7.

Les crochets, montrant une forme arrondie, sont ainsi mobiles entre une position d'ouverture et une position de verrouillage. Dans la position d'ouverture (non représentée) les crochets ne sont pas insérés dans les encoches et sont placés en retrait du logement. Dans la position de verrouillage représentée en figures 4 et 5, les extrémités des crochets 15 sont au moins en partie insérés dans les encoches 17. On notera que la forme trapézoïdale de la platine de fixation 9 permet d'absorber des dispersions de dimensionnement. Par exemple en figure 5 les extrémités des crochets 15 pénètrent dans les encoches 17 jusqu'à en toucher le fond. Cette position correspond à la position nominale de verrouillage des crochets 15 dans les encoches. La figure 4 montre une situation dans laquelle malgré une dispersion maximale, la position de verrouillage est atteinte avec une faible pénétration des crochets 15 dans les encoches 17. Plus particulièrement, on notera que la position de verrouillage est atteinte lorsque le ou les crochets 15 montrent une surface de contact coopérant avec la surface plane complémentaire de la ou des encoches 17. La surface de contact permet ainsi à l'encoche 17 de retenir le crochet 15.

De préférence, la surface de contact d'un crochet 15 est agencée tangentiellement par rapport à l'arc de cercle formé lors du déplacement dudit crochet 15 de sorte à empêcher toute rotation intempestive de ce crochet 15 lors des différentes manipulations de la coque 7 par l'utilisateur. A ce titre, la figure 5 montre la normale à la surface de contact qui passe par l'axe de rotation du crochet 15.

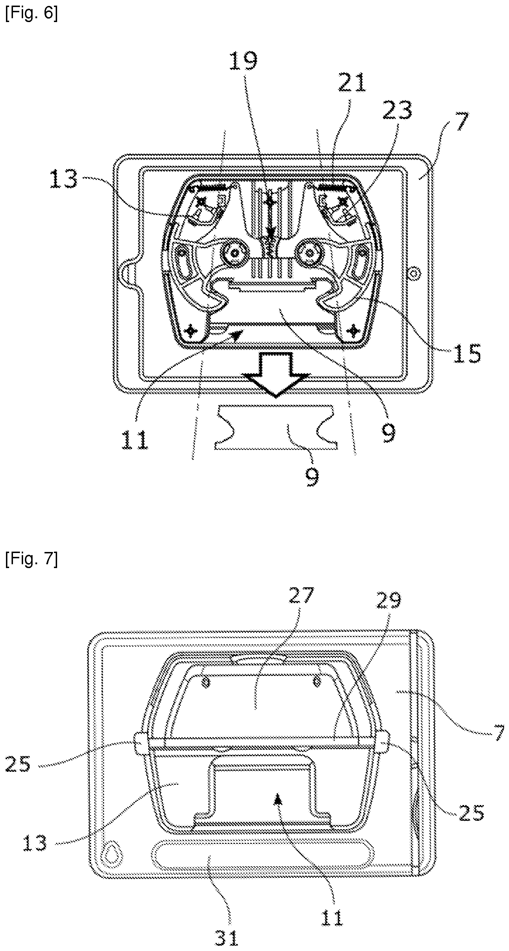

Dans la configuration préférée, illustrée en figure 6, et afin de renforcer le maintien de la coque 7 sur le dispositif de support, la coque 7 comprend au moins une paire de crochets 15 formant une mâchoire et la platine de fixation 9 comprend au moins une paire d'encoches 17. La paire de crochets 15 permet ainsi de saisir la platine de fixation 9 et donc de maintenir la coque 7 dans une position stable lorsque la paire de crochets 15 est en position de verrouillage.

La présence d'une paire de crochets 15 associée à un arrimage du dispositif de support à la traverse de la planche de bord du véhicule permet à l'ensemble de résister à l'arrachement lorsqu'une force d'environ 40 daN est exercée sur la coque.

Lorsque deux crochets 15 forment la mâchoire de la coque 7, il est préférable que chacun des crochets montrent un engrenage 19. Comme montré à la figure 6, les deux crochets 15 sont engrenés entre eux grâce à cet engrenage 19, ce qui permet d'entraîner les crochets en rotation autour de leurs axes de rotation respectifs selon des sens de rotation différents. Cela permet aux deux crochets 15 de se déplacer en même temps entre les positions d'ouverture et de verrouillage et dès lors de renforcer l'emprise des crochets 15 sur la platine de fixation 9 du dispositif de support.

Chaque crochet 15 peut par ailleurs être avantageusement précontraint par des moyens élastiques, par exemple au moins un ressort 21, de sorte à les ramener de manière automatique en position de verrouillage. Cette configuration permet d'une part d'éviter une ouverture intempestive des crochets 15 et d'autre part de verrouiller automatiquement le dispositif de fixation lors de l'insertion de la platine de fixation dans le logement. Les crochets 15 pénètrent automatiquement et dès que possible dans les encoches 17.

La figure 6 montre également que la platine de fixation 9 du dispositif de support est de forme trapézoïdale avec deux côtés non parallèles et deux bases étagées selon la direction verticale. Préférentiellement, la platine de fixation 9 forme un trapèze isocèle. La forme trapézoïdale permet à l'utilisateur de guider l'insertion de la coque 7, comme indiqué par la flèche représentée sur la figure 6, de manière à ce que la platine de fixation 9 soit retenue par les crochets 15 du dispositif de fixation 13 de la coque 7. Avantageusement, la plus petite base montrée par la forme trapézoïdale est disposée supérieure à l'autre base. Avantageusement encore, la ou les encoches 17 sont creusées ou découpées dans les côtés non-parallèles. On comprend que la coque est mise en place sur le dispositif de support par un mouvement de translation en direction du bas. Lors de cette translation la platine de fixation 9 est insérée dans son logement 11 et va écarter les crochets 15 en coopérant avec leur surface arrondie jusqu'à ce que les crochets 15 parviennent à hauteur des encoches 17 et s'y insèrent verrouillant l'ensemble.

La platine de fixation 9 peut préférentiellement être inclinée par rapport à la verticale de sorte à optimiser le confort d'utilisation.

Idéalement, au moins une butée 23 est associée à chaque crochet 15 afin de restreindre le déplacement du crochet entre une position de verrouillage nominale et une position d'ouverture maximale. La ou les butées 23 peuvent ainsi comprendre un premier dispositif agencé pour caler ledit crochet 15 lorsque celui-ci est en position de verrouillage nominale et un deuxième dispositif agencé pour caler ledit crochet 15 lorsque celui-ci est en position d'ouverture maximale. Typiquement, lesdits dispositifs sont formés par des reliefs créés dans le dispositif de fixation 13, par exemple lors d'une opération de moulage.

Préférentiellement, chaque crochet 15 présente un moyen de préhension 25 (référencé en figures 5 et 7) qui est utile pour que l'utilisateur puisse ramener ledit crochet 15 dans une position d'ouverture et ainsi récupérer la coque 7 recevant l'appareil électronique portatif. Le moyen de préhension 25 est avantageusement accessible depuis la paroi arrière de la coque 7 et/ou depuis l'une des parois latérales de la coque 7.

Comme montré sur la figure 7, un pied rabattable 27, par exemple fixé autour d'un axe de rotation 29 s'étendant entre les parois latérales de la coque 7, peut se trouver sur la face externe de la paroi arrière de ladite coque 7, permettant ainsi à l'utilisateur de poser la coque 7 contenant l'appareil électronique portatif sur une surface plane, par exemple une table, hors du véhicule sans devoir enlever l'appareil électronique portatif de la coque 7. Un rebord 31 peut avantageusement être également agencé sur la face externe de la paroi arrière de la coque. Ce rebord 31 a par exemple pour fonction de coopérer avec l'élément de façade 2 associé au dispositif de support 3 pour le faire pivoter vers le bas lors de la mise en place de la coque 7 sur le dispositif de support. Avantageusement l'élément de façade 2 est associé à un moyen de rappel 6 qui le ramènent en position neutre lorsque la coque est retirée du dispositif de support 3. Dans certaines configurations préférées, le pied rabattable 27 et le rebord 31 peuvent être tous les deux présents pour permettre à l'utilisateur d'utiliser l'appareil électronique portatif inséré dans la coque 7 avec le pied et/ou légèrement incliné dans une position essentiellement à plat.

La coque 7 est prévue pour recevoir un appareil électronique portatif avec un écran, tel qu'une tablette numérique ou un smartphone, au sein d'une cavité ouverte ou fermée du côté de l'écran de l'appareil portatif. La cavité et le logement de la coque sont préférentiellement séparés par une paroi. La coque peut comprendre un écran de confidentialité fermant la cavité et disposé en regard de l'écran de la tablette numérique ou du smartphone.

Comme illustré en figure 8 et 9, l'élément de façade 2 comporte un volet 22 de forme sensiblement plane, qui comporte sur sa face orientée vers le dispositif de support 3 deux pattes 24. Ces deux pattes 24 s'étendent sensiblement perpendiculairement au volet 22, et comporte des ouvertures pour recevoir l'axe de rotation 4. Cet assemblage avec l'axe 4 permet la rotation de l'élément de façade 2 par rapport au dispositif de support 3 autour dudit axe de rotation 4. En position neutre, l'élément de façade 2 est en vis-à-vis de la platine de fixation 9 suivant la direction de translation du dispositif de support 3 illustré par la flèche T. En position dégagée illustrée en figure 9, l'élément de façade 2 est rabattu par pivotement sous l'effort et le contact avec la coque 7 équipé de l'appareil électronique portatif lors de son installation sur la platine de fixation 9.

Le moyen de rappel 6 de l'élément de façade 2 vers la position neutre est un ressort 6, relié d'un côté au dispositif de support 3 et de l'autre à l'élément de façade 2. L'élément de façade 2, par exemple le volet 22, comporte une cavité dans son épaisseur dans laquelle s'insère l'une des extrémités du ressort 6. Le ressort 6 comporte une partie hélicoïdale, utilisée en torsion, disposée entre une première extrémité et une deuxième extrémité du ressort 6. La première extrémité est maintenue au dispositif de support 3, tandis que la deuxième extrémité est maintenue à l'élément de façade 2. La partie hélicoïdale est enfilée sur l'axe de rotation 4. Le maintien de la première extrémité est réalisé par exemple à l'aide de butée en saillie installée sur le dispositif de support 3, ou encore par insertion de l'extrémité du ressort dans une fente ou encore une cavité.

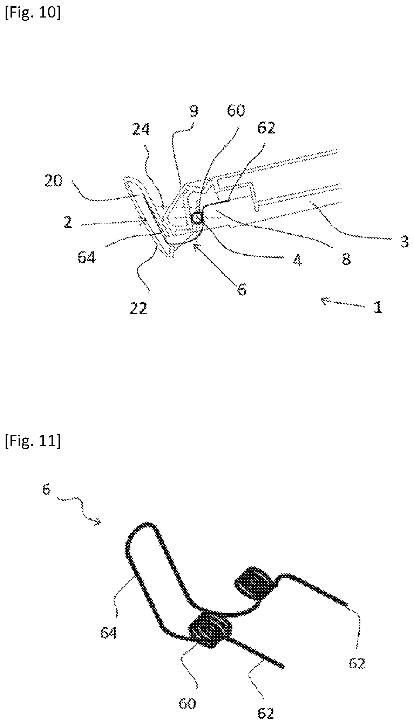

Les figures 10 et 11 montre un mode de réalisation particulier du système de rappel 6 et son montage sur le dispositif de support 3. Les pattes 24 sont disposées de sorte à être de part et d'autre du dispositif de support 3, c'est-à-dire qu'une partie du dispositif de support 3 est entre les deux pattes 24. L'axe de rotation 4 traverse le dispositif de support 3 et les deux pattes 24. Il relie chacune des pattes 24 au dispositif de support 3. La figure 10 montre le dispositif de support 3 avec le ressort 6 et l'élément de façade 2 en section selon un plan perpendiculaire à l'axe de rotation 4, plan passant entre les deux pattes 24. Lors du passage de la position neutre à la position dégagée, l'élément de façade 2 pivote sous le dispositif de support 3, c'est-à-dire que lorsque le dispositif de support 3 est installé dans un habitacle de véhicule, du côté du dispositif de support 3 orienté vers le plancher du véhicule, donc entre le dispositif de support 3 et le plancher véhicule.

Le dispositif de support 3 comporte un creux 8 débouchant sur son dessous, c'est-à-dire sur sa face disposée en dessous, orientée vers le plancher du véhicule. L'axe de rotation 4 débouche dans le creux 8. Le creux 8 comporte de part et d'autre des faces latérales, situées sensiblement en vis-à-vis des pattes 24 de l'élément de façade 2, et qui sont traversées par l'axe de rotation 4. L'axe de rotation 4 peut être réalisé par deux sections alignées traversant les faces latérales et reliées chacune à l'une des pattes 24, ou être un seul élément traversant de part en part le creux 8 et s'étendant d'une patte 24 à l'autre.

Le ressort 6 comporte, comme illustré en figure 11, deux parties hélicoïdales 60, une partie intermédiaire 64 située entre les deux parties hélicoïdales 60, et deux extrémités 62. C'est-à-dire que chaque partie 60 hélicoïdale comporte une extrémité formant l'une des extrémité 62 du ressort 6, et les deux parties hélicoïdales 60 sont reliées entre-elles par la partie intermédiaire 64. La partie intermédiaire 64 est liée à l'élément de façade 2, les deux extrémités 62 sont reliées au dispositif de support 3, et chacune des parties hélicoïdales 60 est traversée par l'axe de rotation. Ces deux parties hélicoïdales 60 sont donc suivant une hélice de même axe. La partie intermédiaire 64 a une forme en U, dont les branches sont courbées à proximité des parties hélicoïdales 60. Cette forme de la partie intermédiaire 64 permet d'insérer ladite partie intermédiaire 64 dans la cavité 20 du volet 22, ladite cavité 20 débouchant sur face du volet 22 orientée vers le dispositif de support 3 lorsque l'élément de façade 2 est en position neutre. Le ressort 6 applique donc l'effort de rappel sur l'élément de façade par sa partie intermédiaire 64, effort issu notamment de la mise en tension des deux parties hélicoïdales 60. Le ressort 6 est réalisé par exemple, comme illustré en figure 11, par un unique fil métallique, tel qu'un fil d'acier, plié et courbé de manière à réaliser les parties hélicoïdales 60, la partie intermédiaire 64 et les extrémités 62.

Les parties hélicoïdales 60 sont disposées à l'intérieur du creux 8, traversées par l'axe de rotation 4 qui ainsi maintien le ressort 6. Les extrémités 62 sont aussi à l'intérieur du creux 8. Les parties hélicoïdales 60 et les extrémités 62 sont en appui contre les faces latérales du creux 8. La largeur du ressort 6, c'est-à-dire sa dimension dans la direction de l'axe de rotation 4, direction parallèle à celle de la direction de l'axe des parties hélicoïdales 60, est par exemple supérieure à la largeur du creux 8, c'est-à-dire à l'écartement entre les faces latérales dudit creux 9. Ces faces latérales peuvent comporter des zones en saillie contre lesquelles s'appuient les extrémités 62 du ressort 6, afin de mettre en tension le ressort 6 et ainsi créer un effort sur l'élément de façade 2 vers la position neutre. Les zones en saillies sont par exemple des marches réalisées sur les faces latérales du creux 9 contre lesquelles s'appuies les extrémités 62 du ressort 6. Ces zones en saillies forment un élément des extrémités 62 du ressort 6.

## Revendications

1. Ensemble (1) pour la fixation d'un appareil électronique portatif dans un véhicule automobile, l'ensemble (1) comprend un dispositif de support (3),
- le dispositif support (3) comprend une platine (9) de fixation destinée à fixer de manière réversible un appareil électronique portatif,
- et ledit ensemble (1) comprend un élément de façade (2) monté pivotant sur ledit dispositif de support (3) autour d'un axe de rotation (4), entre une position neutre dans laquelle l'élément de façade (2) est disposé en vis-à-vis de la platine (9) et une position dégagée dans laquelle l'élément de façade (2) est en dehors du vis-à-vis de la platine (9) de sorte à permettre la fixation d'un appareil électronique portatif sur ladite platine (9), et un moyen de rappel (6) de l'élément de façade (2) vers la position neutre, le moyen de rappel étant un ressort (6) s'appuyant d'un côté sur le dispositif de support (3) et de l'autre côté sur l'élément de façade (2), l'élément de façade (2) étant maintenu sur le dispositif de support (3) de part et d'autre dudit dispositif de support (3) par l'axe de rotation (4), **caractérisé en ce que** le ressort comporte deux parties hélicoïdales (60) et une partie intermédiaire disposée entre les deux parties hélicoïdales (60), chacune de ces parties hélicoïdales (60) étant traversée par l'axe de rotation (4) et comportant chacune une extrémité (62) reliée au dispositif de support (3), la partie intermédiaire (64) étant reliée à l'élément de façade (2).

2. Ensemble suivant la revendication 1, dont l'élément de façade (2) comporte une cavité (20), la partie intermédiaire (64) du ressort (6) étant dans la cavité (20) de l'élément de façade (2), ladite cavité (20) débouchant sur la face du volet (22) orientée vers le dispositif de support (3) lorsque l'élément de façade (2) est en position neutre.

3. Ensemble suivant l'une des revendications de 1 à 2, dont le dispositif de support (3) comporte un élément de maintien contre lequel s'appuie chacune des extrémités (62) du ressort (6).

4. Ensemble (1) suivant l'une des revendications précédentes, comprenant une coque (7) destinée à recevoir l'appareil électronique portatif, la coque (7) comportant un logement (11) configuré pour recevoir ladite platine (9) de fixation en vue de la fixation réversible de la coque (7) sur le dispositif de support (3).

5. Ensemble (1) selon la revendication 4, **caractérisé en ce que** la platine (9) de fixation comprend au moins une encoche (17) et **en ce que** la coque (7) comprend un dispositif de fixation (13) avec au moins un crochet (15) mobile entre une position d'ouverture et une position de verrouillage pour la fixation réversible de la coque (7) sur le dispositif de support (3) par coopération entre ledit crochet (15) et ladite encoche (17); de préférence, la coque (7) comprend au moins une paire de crochets (15) formant une mâchoire et la platine (9) de fixation comprend au moins une paire d'encoches (17).

6. Véhicule comportant un ensemble (1) suivant l'une des revendications précédentes.

## Patentansprüche

1. Anordnung (1) zur Befestigung eines tragbaren elektronischen Gerätes in einem Kraftfahrzeug, wobei die Anordnung (1) eine Haltevorrichtung (3) umfasst,
- die Haltevorrichtung (3) eine Halteplatte (9) zur reversiblen Befestigung eines tragbaren elektronischen Gerätes umfasst,
- und die Anordnung (1) umfasst ein Fassadenelement (2), das an der Trägervorrichtung (3) um eine Drehachse (4) zwischen einer neutralen Position, in der das Fassadenelement (2) der Platine (9) gegenüberliegt, und einer freigegebenen Position, in der das Fassadenelement (2) außerhalb der Platine (9) liegt, schwenkbar angebracht ist, um die Befestigung eines tragbaren elektronischen Gerätes an der Platine (9) zu ermöglichen, und ein Rückstellmittel (6) des Fassadenelements (2) in die neutrale Position, das Mittel Rückstelleinrichtung, bei der es sich um eine Feder (6) handelt, die sich einerseits auf der Tragvorrichtung (3) und andererseits auf dem Fassadenelement (2) abstützt, wobei das Fassadenelement (2) auf beiden Seiten der Tragvorrichtung (3) durch die Drehachse (4) an der Tragvorrichtung (3) gehalten ist, **dadurch gekennzeichnet, dass** die Feder zwei schraubenförmige Teile (60) und einen zwischen den beiden schraubenförmigen Teilen (60) angeordneten Zwischenabschnitt aufweist, wobei jeder dieser schraubenförmigen Teile (60) von der Drehachse (4) durchsetzt ist und jedes ein Ende (4) aufweist 62) mit der Trägereinrichtung (3) verbunden ist, wobei das Zwischenteil (64) mit dem Fassadenelement (2) verbunden ist.

2. Anordnung nach Anspruch 1, bei der das Fassadenelement (2) eine Ausnehmung (20) aufweist, wobei sich der Zwischenabschnitt (64) der Feder (6) in der Ausnehmung (20) des Fassadenelements (2) befindet, wobei die Ausnehmung (20) an der Seite der Klappe (22) mündet, die der Stützvorrichtung (3) zugewandt ist, wenn sich das Fassadenelement (2) in der neutralen Position befindet.

3. Anordnung nach einem der Ansprüche 1 bis 2, bei der die Haltevorrichtung (3) ein Halteelement aufweist, an dem sich jedes der Enden (62) der Feder (6) abstützt.

4. 4/ Anordnung (1) nach einem der vorhergehenden Ansprüche, mit einer Schale (7) zur Aufnahme des tragbaren elektronischen Geräts, wobei die Schale (7) ein Gehäuse (11) aufweist, das zur Aufnahme der Befestigungsplatte (9) für die reversible Befestigung der Schale (7) an der Haltevorrichtung (3) ausgebildet ist.

5. Anordnung (1) nach Anspruch 4, **dadurch gekennzeichnet, dass** die Befestigungsplatine (9) mindestens eine Kerbe (17) aufweist und dass die Schale (7) eine Befestigungsvorrichtung (13) mit mindestens einem Haken (15) aufweist, der zwischen einer Öffnungsposition und einer Verriegelungsposition bewegbar ist, um die Schale (7) durch Zusammenwirken zwischen dem Haken (15) und der Kerbe (17) an der Haltevorrichtung (3) reversibel zu befestigen; wobei vorzugsweise die Schale (7) mindestens ein Paar Haken (15) aufweist, die eine Backe und die Platine (9) bilden) mindestens ein Paar Kerben (17) aufweist.

6. Fahrzeug mit einer Baugruppe (1) nach einem der vorhergehenden Ansprüche.

## Claims

1. Assembly (1) for fixing a portable electronic apparatus in a motor vehicle, the assembly (1) comprises a support device (3),
the support device (3) comprises a fixing plate (9) intended to fix a portable electronic apparatus in a reversible manner,
- and said assembly (1) comprises a front element (2) mounted pivotably on said support device (3) about an axis of rotation (4), between a neutral position in which the front element (2) is arranged opposite the plate (9) and a disengaged position in which the front element (2) is outside the plate (9) so as to allow the fixing of a portable electronic apparatus on said plate (9), and a means (6) for returning the front element (2) to the neutral position, the return means being a spring (6) bearing on one side on the support device (3) and on the other side on the front element (2), the front element (2) being held on the support device (3) on either side of said support device (3) by the axis of rotation (4), **characterized in that** the spring comprises two helical parts (60) and an intermediate part arranged between the two helical parts (60), each of these helical parts (60) being traversed by the axis of rotation (4) and each comprising an end (62) connected to the support device (3), the intermediate part (64) being connected to the front element (2).

2. Assembly according to claim 1, the facade element (2) of which comprises a cavity (20), the intermediate part (64) of the spring (6) being in the cavity (20) of the facade element (2), the said cavity (20) opening onto the face of the flap (22) oriented towards the support device (3) when the facade element (2) is in the neutral position.

3. Assembly according to one of claims 1 to 2, the support device (3) of which comprises a holding element against which each of the ends (62) of the spring (6) bears.

4. Assembly (1) according to one of the preceding claims, comprising a shell (7) intended to receive the portable electronic apparatus, the shell (7) comprising a housing (11) configured to receive said fixing plate (9) with a view to the reversible fixing of the shell (7) to the support device (3).

5. Assembly (1) according to claim 4, **characterized in that** the fixing plate (9) comprises at least one notch (17) and **in that** the shell (7) comprises a fixing device (13) with at least one hook (15) movable between an open position and a locking position for the reversible fixing of the shell (7) to the support device (3) by cooperation between the said hook (15) and the said notch (17); preferably, the shell (7) comprises at least one pair of hooks (15) forming a jaw and the fixing plate (9) comprises at least a pair of notches (17).

6. Vehicle comprising an assembly (1) according to one of the preceding claims.
